# EUROPÄISCHE PATENTSCHRIFT

(11) **EP 1 466 161 B1**
(45) Veröffentlichungstag und Bekanntmachung des Hinweises auf die Patenterteilung: **11.08.2010**
(21) Anmeldenummer: 03729441.0
(22) Anmeldetag: 11.01.2003
(51) Int. Cl.: G01N 15/05, G01N 21/90

(54) **ANORDNUNG UND VERFAHREN ZUR ANALYSE VON KÖRPERFLÜSSIGKEIT**
ARRANGEMENT AND METHOD FOR THE ANALYSIS OF BODY FLUIDS
SYSTEME ET PROCEDE POUR ANALYSER DES LIQUIDES ORGANIQUES

(30) Priorität: 19.01.2002 DE 10205773; 19.01.2002 DE 10205772; 26.04.2002 DE 10218693; 26.04.2002 DE 10218692
(43) Veröffentlichungstag der Anmeldung: 13.10.2004
(73) Patentinhaber: PVT Probenverteiltechnik GmbH, 71332 Waiblingen (DE)
(72) Erfinder: ZIEGLER, Michael, 71409 Schwaikheim (DE)
(74) Vertreter: Patentanwälte Ruff, Wilhelm, Beier, Dauster & Partner
(86) Internationale Anmeldenummer: PCT/EP2003/000200
(87) Internationale Veröffentlichungsnummer: WO 2003/060484

(56) Entgegenhaltungen:
- EP-A- 0 422 845
- US-A- 4 710 874
- US-A- 5 365 343
- US-A- 5 617 204
- US-A- 5 763 265
- PATENT ABSTRACTS OF JAPAN vol. 1998, no. 11, 30. September 1998 (1998-09-30) & JP 10 170228 A (SUMITOMO METAL IND LTD), 26. Juni 1998 (1998-06-26)
- PATENT ABSTRACTS OF JAPAN vol. 016, no. 003 (P-1294), 7. Januar 1992 (1992-01-07) & JP 03 225264 A (FUJI ELECTRIC CO LTD), 4. Oktober 1991 (1991-10-04)
- PATENT ABSTRACTS OF JAPAN vol. 1996, no. 04, 30. April 1996 (1996-04-30) & JP 07 335132 A (SONY CORP), 22. Dezember 1995 (1995-12-22)
- PATENT ABSTRACTS OF JAPAN vol. 1997, no. 09, 30. September 1997 (1997-09-30) & JP 09 133687 A (MEIJI DENKI KOGYO KK), 20. Mai 1997 (1997-05-20)
- PATENT ABSTRACTS OF JAPAN vol. 2000, no. 23, 10. Februar 2001 (2001-02-10) & JP 2001 165752 A (HITACHI LTD), 22. Juni 2001 (2001-06-22)

## Beschreibung

Die Erfindung betrifft eine Anordnung sowie ein Verfahren zur Analyse von Körperflüssigkeiten.

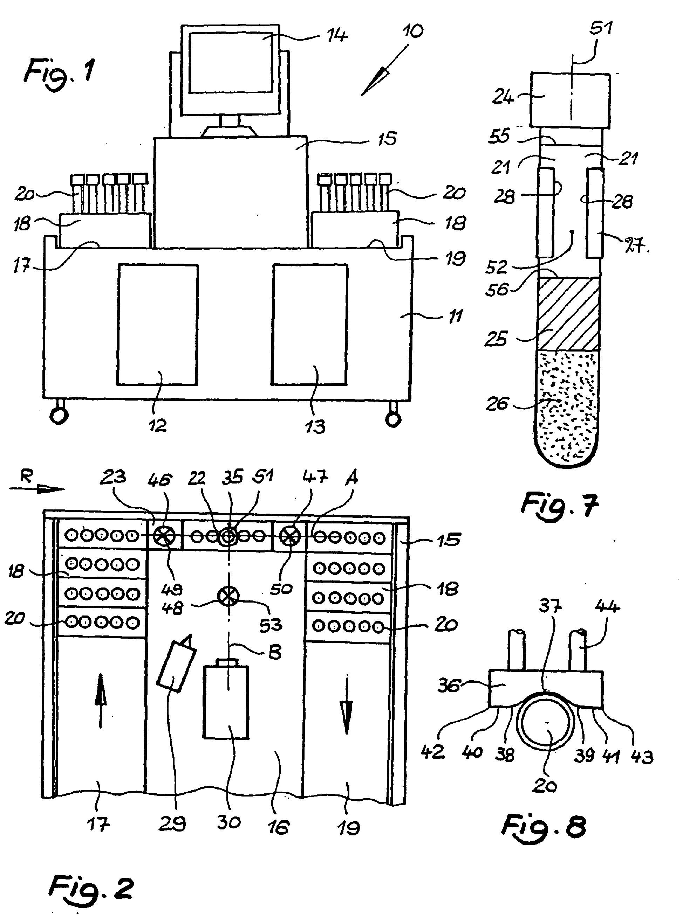

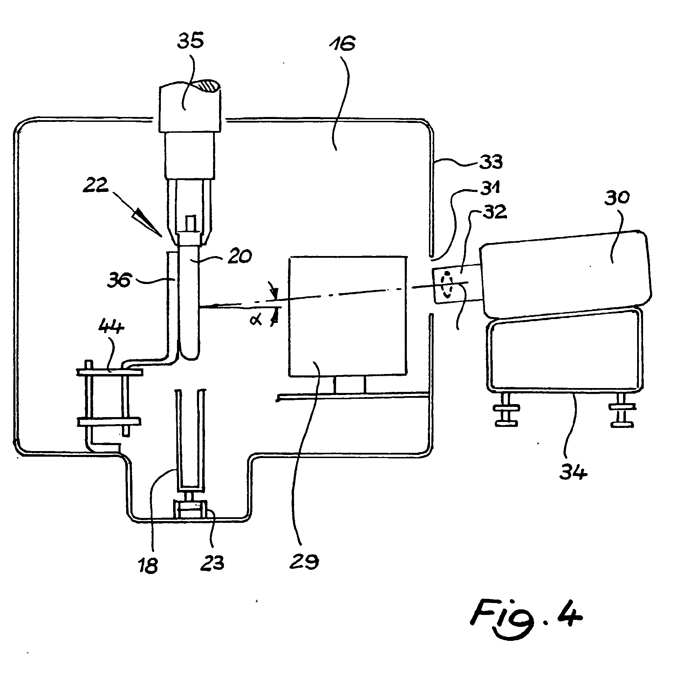

Vor der Analyse von Körperflüssigkeit, wie Blutserum oder Blutplasma, werden zentrifugierte Proben von Körperflüssigkeit daraufhin untersucht, ob sie "gut", d.h. für die Analyse tauglich sind oder ob sie aufgrund von Verunreinigungen oder bestimmter Krankheitsbilder verfärbt oder getrübt sind. Dies ist bspw. der Fall, wenn so genannte Clots (Zusammenballungen fester Inhaltsstoffe) in der Blutprobe enthalten sind oder wenn die Blutproben hämolytisch, lipämisch oder ikterisch sind. Die Erkennung erfolgt gegenwärtig in manueller Weise durch visuelle Inaugenscheinnahme der Proben, bevor dieselben weiterverarbeitet werden. Diese Vorgehensweise ist zeitaufwendig und arbeitsintensiv, sie führt zu Fehlern im nachfolgenden Laborbetrieb und hat Ausfallzeiten von Analysegeräten und zeitaufwendige Nacharbeit zur Folge.
JP9133687 offenbart eine Anordnung zur Analyse von Flüssigkeiten in einem Behältnis in einem lichtreflexarmen Raum 9 mit mindestens einer Lampe 8. D5 offenbart eine Beleuchtungseinrichtung 8, in einem lichtarmen Gehäuse 9 zur Beleuchtung eines auf einem motorisierten Drehscheibe positionierten und von einem Greifer 7 festgehaltenen Proberöhrchens 10, das eine aus schichtförmigen Serum, Trennmittel und Blutkuchen bestehenden zentrifugierten Probe enthält Ein Glanzdetektor 6 registriert die Position eines Barcode-Etiketts 11, danach wird das Röhrchen mittels der motorisierten Drehscheibe derart gedreht, daß die Kamera 2 einen freien Blick auf die Probenflüssigkeit durch die Spalte zwischen den Enden des Etiketts hat. Bei der Bildaufnahme wird ein Plasfikkörper oder Papier aus weiß- bzw. graufärbigen Material hinter dem Röhrchen angeordnet um einen möglichst gleichen Hintergrund bezüglich der Fläche des Röhrchens mit und ohne Etikett darzustellen. Das gesamte System wird von einem Rechner 4 gesteuert, der mit allen Bauteilen verbunden ist (siehe Fig. 1). Das Videogerät 11 erzeugt ein punktförmiges digitales Bild, dessen Punkte linienmäßig gemäß einem Farbraumsystem (Siehe Fig. 4) untersucht werden um den Übergang zwischen Serum und Blutkuchen bzw. Trennmittel zu lokalisieren.

Der Erfindung liegt die Aufgabe zugrunde, eine Anordnung zu schaffen, mit der die Qualität der zu analysierenden Körperflüssigkeit sowie ihre Menge zuverlässig bestimmbar ist.

Erfindungsgemäß wird dies dadurch erreicht, dass zur Bestimmung der Qualität und der Menge der Körperflüssigkeit ein lichtreflexarmer Raum vorgesehen ist, in dem ein die Körperflüssigkeit enthaltendes Behältnis in einer Analyseposition bereit gestellt ist, mit einem mit einer elektronisches Bildauswertevorrichtung elektronisch verbundenen Bildaufnahmegerät, das auf das Behältnis ausgerichtet und fokussiert ist, mit einer Beleuchtungseinrichtung, mit zu beiden Seiten des Behältnisses angeordneten seitlichen Lampen, derart, dass die Mittelpunkte beider Lampen und der Mittelpunkt des Behältnisses auf einer geraden Linie (A) liegen und dass eine weitere mittlere Lampe vor-gesehen und angeordnet ist, derart, dass die Mittelpunkte dieser mittleren Lampe und des Behältnisses ebenfalls auf einer geraden Linie (B) liegen, die senkrecht zur Linie (A) verläuft.

Erfindungsgemäß ist die Körperflüssigkeit in einem lichtreflexarmen, wenn möglich in einem lichtreflexfreien Raum in einem Behältnis bereitgestellt und das Bildaufnahmegerät ist auf das in einer Analyseposition befindliche Behältnis ausgerichtet und fokussiert ist. Damit lassen sich qualitativ besonders gute Aufnahmen erzielen, so dass die automatische Bildauswertung möglichst wenig fehlerbehaftet ist.

Hierzu ist eine Beleuchtungseinrichtung vorgesehen, wonach zu beiden Seiten des in der Analyseposition befindlichen Behältnisses jeweils eine seitliche Lampe angeordnet ist, derart, dass die Mittelpunkte beider Lampen und der Mittelpunkt des Behältnisses auf einer geraden Linie (A) liegen und dass eine weitere mittlere Lampe vorgesehen und angeordnet ist, derart, dass die Mittelpunkte dieser mittleren Lampe und des Behältnisses ebenfalls auf einer geraden Linie (B) liegen, die senkrecht zur Linie (A) verläuft.

Damit ist eine zuverlässige, schnelle und selbsttätige maschinelle Bestimmung der Qualität und Menge der zu analysierenden Körperflüssigkeit möglich. Die erfindungsgemäße Vorrichtung bzw. das erfindungsgemäße Verfahren erlauben eine wesentliche Automatisierung und Rationalisierung der Analyse von Blutproben und damit eine erhebliche Zeit- und Kostenersparnis.

Vorteilhafte Weiterbildungen ergeben sich aus den Unteransprüchen.

Das Bildaufnahmegerät kann bspw. eine fotographische Stehbildkamera, eine Farbbildkamera, eine Videokamera oder eine Spektralkamera sein. Auch andere optische Geräte zur Aufnahmen von Bildern bzw. Bilddateien sind selbstverständlich brauchbar.

Dabei kann das Bildaufnahmegerät in seiner vertikalen Ausrichtung unter einem spitzen Winkel auf das Behältnis ausgerichtet und fokussiert sein. Auf diese Weise können Lichtreflexionen, die das Analyseergebnis verfälschen könnten, zumindest teilweise vermieden werden, so dass ein möglichst unverfälschtes und aussagefähiges Bild der Körperflüssigkeit erhalten werden kann.

Ferner können die Lampen so angeordnet sein, dass sie von dem Behältnis jeweils den gleichen Abstand aufweisen. Dieser Abstand kann in einem konkreten Ausführungsbeispiel bspw. sechzig [60] Millimeter betragen. Schließlich kann die vertikale Höhe der zu beiden Seiten des in der Analyseposition befindlichen Behältnisses angeordneten seitlichen Lampen größer bemessen sein als die vertikale Höhe der mittleren Lampe. Im konkreten Ausführungsbeispiel kann der Unterschied in der Höhe zwischen den beiden seitlichen Lampen und der mittleren Lampe bspw. sechzehn [16] Millimeter betragen.

In einer weiteren Ausführungsform kann ein Scanner vorgesehen, der auf das in der Analyseposition befindliche Behältnis ausgerichtet ist. Dieser Scanner ist vorzugsweise ein Barcode-Scanner und ermöglicht es in vorteilhafter Weise, die Ränder eines auf dem Behältnis befindlichen Etiketts zu erfassen. Gleichzeitig wird der Barcode des Etiketts gelesen, womit eine eindeutige Identifizierung der Probe möglich ist. Damit kann das Behältnis anschließend in besonders einfacher Weise mittels einer Steuerungssoftware, welche die Bewegung bspw. eines Hub-Dreh-Greifers steuert, in eine Analyseposition gebracht werden, in der das Etikett auf der von dem Bildaufnahmegerät abgewendeten Seite des Behältnisses liegt.

Zusätzlich kann zum Zwecke des Ausblendens des Barcodes eine Antireflexplatte vorgesehen sein, die an der dem Bildaufnahmegerät abgekehrten Seite des Behältnisses angeordnet ist. Dabei ist die Antireflexplatte vorzugsweise mit einer weißen Oberfläche versehen und kann eine der Umfangsform des Behältnisses angepasste konkave Einsenkung aufweisen, um die Kontur derjenigen des Behältnisses anzupassen und den Barcode möglichst vollständig auszublenden. Auf diese Weise können die von dem Bildaufnahmegeräte von der Körperflüssigkeit aufgenommenen Bilder in besonders vorteilhafter Weise durch den Barcode nicht verfälscht werden, da der Barcode durch die Antireflexplatte ausgeblendet wird. Ggf. kann, um zusätzliche Reflexionen zu vermeiden, die Einsenkung mit Abrundungen in je eine ebene Fläche der Antireflexplatte übergehen, und die Flächen können in je einer scharfkantigen vertikalen Kante, die als Messkanten dienen, enden.

Vorzugsweise wird das Behältnis mittels eines Hub-Dreh-Greifers bewegt. Um dafür Platz zu schaffen, ist die Antireflexplatte aus einer an dem Behältnis anliegenden Stellung in Richtung der optischen Achse des Bildaufnahmegeräts von dem Behältnis weg bewegbar und wieder an das Behältnis heran bewegbar angeordnet. Die Handhabungsvorrichtung selbst, also bspw. der Hub-Dreh-Greifer, ist für die Beförderung eines Behältnisses aus einer Transportposition in seine Analyseposition vorgesehen. Die Handhabungsvorrichtung dreht das Behältnis in Abhängigkeit von der Anordnung des Etiketts in eine Position, in der von dem Bildaufnahmegerät ein korrektes Bild von der im Behältnis befindlichen Körperflüssigkeit erstellt werden kann.

Dabei kann mittels des Bildaufnahmegeräts mindestens ein Bild der Körperflüssigkeit hergestellt werden, das mittels einer Bildverarbeitungssoftware analysiert wird. Je nach Bedarf werden ein oder mehrere Ausschnittbilder hergestellt, die mittels der Bildverarbeitungssoftware zu einem Gesamtbild zusammengesetzt werden.

Die weiteren Merkmale und Vorteile sind der Beschreibung eines in den folgenden Zeichnungen dargestellten Ausführungsbeispiels der Erfindung sowie den weiteren Unteransprüchen zu entnehmen. Es zeigen:
- Figur 1: das erfindungsgemäße Analysegerät in einer Frontansicht in schematischer, nicht maßstabsgetreuer Darstellung;
- Figur 2: die erfindungsgemäße Anordnung zur Analyse von Körperflüssigkeit in einer Drauf- sicht in schematischer, nicht maßstabsgetreuer Darstellung;
- Figur 3: die Anordnung gemäß Fig. 2 in Blickrichtung R mit einem in Transportposition be- findlichen Behältnis in schematischer, nicht maßstabsgetreuer Darstellung;
- Figur 4: die Anordnung gemäß Fig. 2 in Blickrichtung R mit einem in der Analyseposition be- findlichen Behältnis in schematischer, nicht maßstabsgetreuer Darstellung;
- Figur 5: die Anordnung gemäß Fig. 2 mit einer Beleuchtungseinrichtung in einer Draufsicht in schematischer, nicht maßstabsgetreuer Darstellung;

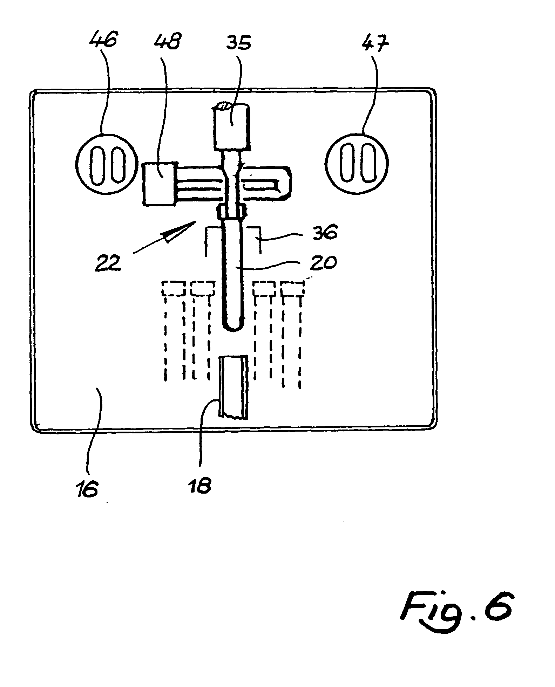

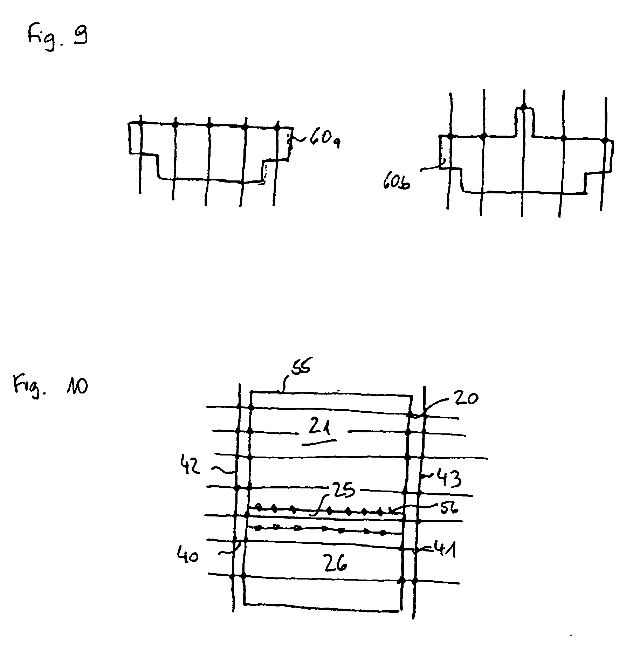

- Figur 6: die Anordnung gemäß Fig. 5 in Blickrichtung S in schematischer, nicht maßstabsge- treuer Darstellung;
- Figur 7: ein mit der erfindungsgemäßen Anordnung verwendetes Behältnis und
- Figur 8: eine Detaildarstellung einer Antireflexplatte in Draufsicht in einer schematischen, nicht maßstabsgerechten Darstellung.

In der Fig. 1 ist ein Gerät 10 zur Analyse von Körperflüssigkeit in seiner Gesamtheit dargestellt. Das Gerät 10 umfasst im wesentlichen einen Schrank 11 zur Aufnahme eines mit einer Steuerungssoftware betriebenen Steuerungsrechners 12 und eines mit einer Bildbearbeitungssoftware betriebenen Bildbearbeitungsrechners 13. Die von den Rechnern 12 und 13 ermittelten Daten werden auf einen Computerbildschirm 14 angezeigt. Auf dem Schrank 11 ist ein Gehäuse 15 angeordnet, das einen lichtreflexfreien Raum 16 umgibt.

Auf einer Seite des Gehäuses 15 ist eine Transportbahn 17 zur Zuführung von in Racks 18 befindlichen Körperflüssigkeit 21 enthaltenden Behältnissen 20 in das Gehäuse 15 vorgesehen. Auf der der Transportbahn 17 gegenüberliegenden Seite des Gehäuses 15 ist eine Transportbahn 19 zum Abtransport von Behältnissen 20 mit analysierter Körperflüssigkeit 21 vorgesehen. Bei der zu analysierenden Körperflüssigkeit 21 kann es sich um Blutserum, Blutplasma oder dergleichen handeln.

Die Fig. 2 zeigt eine Draufsicht auf das offene Gehäuse 15. Die Transportbahnen 17 und 19 sind durch eine quer verlaufende Transportbahn 23 miteinander verbunden. Auf der Transportbahn 23 werden die in den Racks 18 befindlichen Behältnisse 20 nacheinander in eine Analyseposition 22 gebracht.

Der Analyseposition werden Behältnisse 20 mit zentrifugierter Körperflüssigkeit 21 zugeführt, so dass sich, wie in Fig. 7 dargestellt, im oberen Bereich des Behältnisses 20 die Körperflüssigkeit 21, beispielsweise Blutserum, im mittleren Bereich ein Trennmittel 25 und im unteren Bereich ein Blutkuchen 26 befindet. Das Behältnis 20 ist mit einer Kappe 24 verschlossen. Im Bereich der Körperflüssigkeit 21 ist ein Etikett 27 aufgeklebt, dessen sich gegenüberliegende Endkanten 28 einen Abstand von mindestens 6,5 Millimeter voneinander aufweisen, der ein Fenster 52 für eine freie Sicht auf die Körperflüssigkeit 21 zulässt.

Der lichtreflexarme, wenn möglich lichtreflexfreie Raum 16 ist beispielsweise mit mattschwarze Oberflächen aufweisende Innenwände ausgestattet. In dem lichtreflexarmen und wenn möglich lichtreflexfreien Raum 16 sind ein Bildaufnahmegerät 30 und ein Scanner 29 untergebracht, wobei das Bildaufnahmegerät 30 auf das die Körperflüssigkeit 21 enthaltende Behältnis 20 ausgerichtet und fokussiert ist, während der Scanner 29 auf das Etikett 27 ausgerichtet und fokussiert ist.

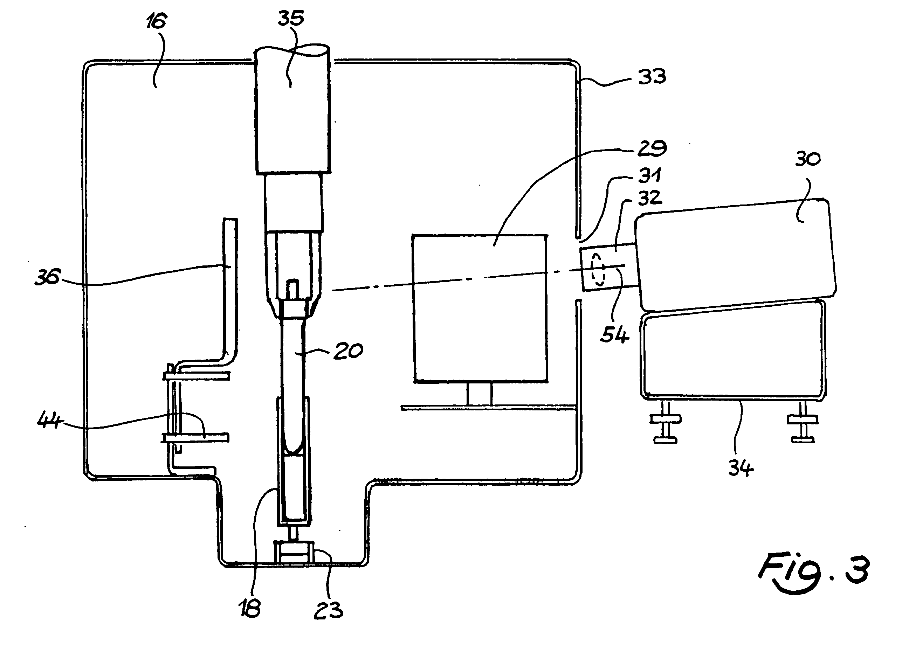

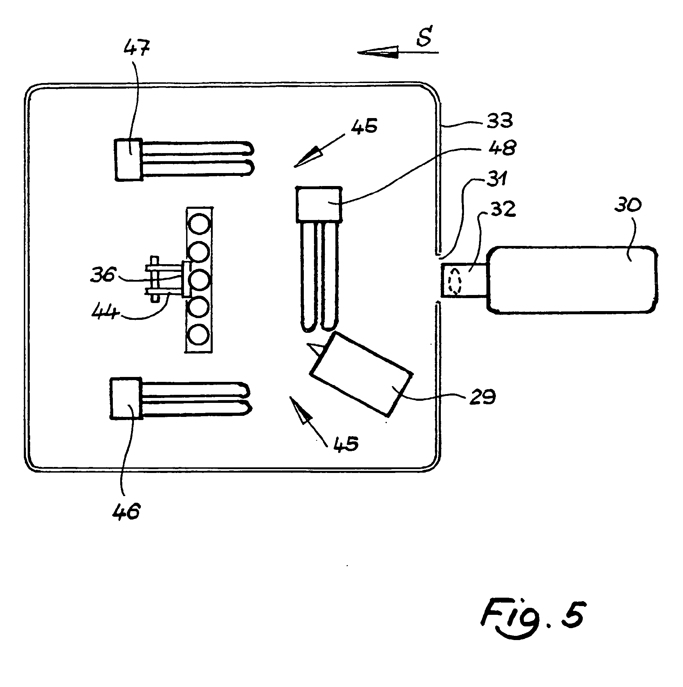

Das Bildaufnahmegerät 30 kann auch außerhalb des Raums 16 angeordnet sein, dann ist jedoch eine lichtdichte Öffnung 31 für den Durchtritt des Objektivs 32 des Bildaufnahmegeräts 30 in einer Wand 33 des Raums 16 ausgebildet (wie die Fig. 3, 4 und 5 zeigen). Das Bildaufnahmegerät 30 kann eine Stehbildkamera, eine Farbbildkamera, eine Videokamera, eine Spektralkamera oder dergleichen sein. Bevorzugt ist eine Farbbildkamera, bspw. eine 3CCD-Videokamera. Die Einstellungen der Farbkamera wie Scharfstellung, Weißabgleich, Blendeneinstellung, Aufhellung können, je nach Geometrie der erfindungsgemäßen Anordnung, fest voreingestellt sein. Sie können aber auch anhand der Bildauswertungssoftware nachjustiert werden, wenn die von der Bildauswertesoftware zur Steuerungssoftware gemeldeten Daten (siehe dazu weiter unten) in Bezug auf die im Rechner 13 gespeicherten Vergleichsdaten von verminderter Qualität sind. Die Verknüpfung zwischen dem Bildaufnahmegerät 30, bspw. einer solchen 3CCD-Videokamera, und dem Bildauswerterechner 13 bedingt eine Umwandlung des von dem Bildaufnahmegerät 30 erstellten Farbsignals in Form eines analogen Spannungssignals in einen digitalen Wert, der von dem Rechner 13 verarbeitet werden kann. Dies kann bspw. über einen an sich bekannten sog. "Framegrabber" oder "Firewire" erfolgen. Diese Einrichtungen können auch in das Bildaufnahmegerät 30 integriert sein, so dass dieses direkt an den Rechner 13 angeschlossen werden kann.

Das Bildaufnahmegerät 30 ist auf einem verstellbaren Gestell 34 befestigt, und es ist mit seiner optischen Achse 54 in seiner vertikalen Ausrichtung gegenüber dem senkrecht angeordneten Behältnis 20 um einen variablen spitzen Winkel α von vorzugsweise 5 Winkelgraden geneigt. Mit dieser Maßnahme kann eine vergleichsweise reflexfreie Aufnahme von dem zylinderförmigen Behältnis 20 bzw. der darin befindlichen Körperflüssigkeit 21 gemacht werden.

Dabei verläuft die optische Achse 54 des Bildaufnahmegeräts 30 in einer vertikalen Ebene, die senkrecht zur Linie A liegt, wobei die Linie B in dieser vertikalen Ebene liegt.

Oberhalb und mittig zur Analyseposition 22 ist ein Hub-Dreh-Greifer 35 angeordnet, dessen hydraulischer Antrieb durch den Steuerungsrechner 12 gesteuert wird. Der Hub-Dreh-Greifer 35 erfasst ein im Rack 18 befindliches Behältnis 20 und hebt es in die Analyseposition 22 und senkt es nach erfolgter Aufnahme durch das Bildaufnahmegerät 30 wieder in das Rack 18 ab.

Eine horizontal hin und her bewegbare Antireflexplatte 36 liegt während einer Aufnahme durch das Bildaufnahmegerät an der demselben abgewandten Seite an, um bei der Aufnahme die auf dem Etikett gedruckten Zeichen, wie beispielsweise einen Barcode, auszublenden.

Von dem Absenken eines analysierten Behältnisses 20 durch den Hub-Dreh-Greifer 35 bewegt sich die Antireflexplatte 36 auf Führungsbolzen 44 weg vom Behältnis 20, um Platz für den Hub-Dreh-Greifer 35 zu machen.

In der Fig. 8 ist in einer Draufsicht die Antireflexplatte 36 dargestellt. Sie ist mit einer dem Behältnis 20 zugekehrten weißen, vorzugsweise schmutzabweisenden Oberfläche versehen, in der eine der Außenform des Behältnisses 20 angepasste konkave Einsenkung 37 eingearbeitet ist. Diese Einsenkung 37 geht zu beiden Seiten über Abrundungen 38 und 39 in ebene Flächen 40 und 41 über. Die ebenen Flächen enden in vertikal angeordneten scharfen Kanten 42 und 43, die als Messkanten dienen. Mit der Antireflexplatte 36 können 15 bis 50 %, vorzugsweise 20 bis 25 % des Behältnisses 20 abgedeckt werden, so dass Etiketten verschiedener Größe und Form zuverlässig ausgeblendet werden können.

In dem lichtreflexarmen und wenn möglich lichtreflexfreien Raum 16 ist schließlich eine Beleuchtungseinrichtung 45 vorgesehen, die während des Analysevorgangs eines mit Körperflüssigkeit gefüllten Behältnisses 20 dasselbe und die darin befindliche Körperflüssigkeit 21 möglichst reflexfrei ausleuchtet.

Eine umfangreiche empirische Ermittlung hat ergeben, dass die nachfolgend beschriebene Anordnung von Lampen eine vergleichsweise reflexfreie Ausleuchtung ergibt.

Die Beleuchtungseinrichtung 45 ist oberhalb eines in der Analyseposition 22 befindlichen Behältnisses 20 angeordnet und umfasst drei Lampen 46, 47 und 48.

Dabei sind zu beiden Seiten des in der Analyseposition 22 befindlichen Behältnisses 20 jeweils eine seitliche Lampe 46 und 47 angeordnet, derart, dass die Mittelpunkte 49 und 50 beider Lampen 46 bzw. 47 und der Mittelpunkt 51 des Behältnisses 20 auf einer geraden Linie A liegen und dass eine weitere mittlere Lampe 48 vorgesehen ist, derart, dass die Mittelpunkte 53 und 51 dieser mittleren Lampe 48 und des Behältnisses 20 ebenfalls auf einer geraden Linie B liegen, die senkrecht zur Linie A verläuft.

Hinzu kommt, dass die drei Lampen 46, 47 und 48 von dem in der Analyseposition befindlichen Behältnis 22 den gleichen horizontalen Abstand aufweisen, der beispielsweise beim Ausführüngsbeispiel sechzig Millimeter beträgt. Ferner ist die vertikale Höhe der zu beiden Seiten des in der Analyseposition 22 befindlichen Behältnisses 20 angeordneten seitlichen Lampen 46 und 47 größer bemessen als die vertikale Höhe der mittleren Lampe 48. Beim Ausführungsbeispiel beträgt dieser Unterschied sechzehn Millimeter.

Die Wirkungsweise der erfindungsgemäßen Anordnung ist folgende:
Hat ein mit Behältnissen 20 gefülltes Rack 18 mit dem ersten Behältnis 20 die Analyseposition erreicht, wird mittels des Bildaufnahmegeräts 30 die Form der das Behältnis 20 verschließende Kappe 24 und damit der Hersteller und die Maße des Behältnisses 20 festgestellt.

Dann hebt der Hub-Dreh-Greifer 45 das Behältnis 20 aufgrund der ermittelten Maße in die geeignete Analyseposition 22, dreht aufgrund der vom Scanner 29 ermittelten Endkanten 28 des Etiketts 27 das Behältnis in eine aufnahmebereite Lage, in der das Fenster 52 dem Bildaufnahmegerät 30 zugekehrt ist. Während mittels des Bildaufnahmegeräts 30 eine oder mehrere Aufnahmen von der Körperflüssigkeit 21 gemacht werden, wird gleichzeitig die Form der Kappe 24 des nachfolgenden Behältnisses erfasst. Das Behältnis 20 mit der analysierten Körperflüssigkeit 21 wird wieder in das Rack 18 abgesenkt, das Rack 18 wird bis zum nachfolgenden Behältnis 20 befördert und dasselbe dann von Hub-Dreh-Greifer 45 an der Kappe 24 erfasst, in die Analyseposition 22 bewegt und aufnahmebereit ausgerichtet.

Zur Ermittlung der Menge der im Behältnis 20 befindlichen Körperflüssigkeit 21 werden mittels des Bildaufnahmegeräts 30 die Trennfläche 55 zwischen der Oberfläche der Körperflüssigkeit 21 und Luft und die Trennfläche 56 zwischen der Körperflüssigkeit 21 und dem Trennmittel 25 bestimmt. Anschließend wird unter Berücksichtigung des Durchmessers des Behältnisses mittels der Bildverarbeitungssoftware aufgrund der erhaltenen Daten die Menge der im Behältnis 20 befindlichen Körperflüssigkeit errechnet.

## Patentansprüche

1. Anordnung zur Analyse von Körperflüssigkeiten mit
- einem lichtreflexarmen Raum (16), in dem ein die Körperflüssigkeit (21) enthaltendes Behältnis (20) in einer Analyseposition (22) bereit gestellt ist,
- einem Bildaufnahmegerät (30) und
- einer elektronischen Bildauswertevorrichtung (13), wobei
- das Bildaufnahmegerät (30) mit der Bildauswertevorrichtung (13) verbunden ist und auf das Behältnis (20) ausgerichtet und fokussiert ist, und
- einer innerhalb des lichtreflexarmen Raumes angeordneten Beleuchtungseinrichtung (45), mit
- zu beiden Seiten des Behältnisses (20) angeordneten jeweils seitlichen Lampen (46,47), derart, dass die Mittelpunkte (49,50) beider Lampen (46,47) und der Mittelpunkt (51) des Behältnisses (20) auf einer geraden Linie (A) liegen, und
- einer weiteren, mittleren Lampe (48), die derart angeordnet ist, dass die Mittelpunkte (53, 51) dieser mittleren Lampe (48) und des Behältnisses (20) ebenfalls auf einer geraden Linie (B) liegen, die senkrecht zur Linie (A) verläuft.

2. Anordnung nach Anspruch 1, **dadurch gekennzeichnet, dass** das Bildaufnahmegerät (30) eine photographische Stehbildkamera, eine Farbbildkamera, eine Videokamera oder eine Spektralkamera ist.

3. Anordnung nach einem der vorhergehenden Ansprüche, **dadurch gekennzeichnet, dass** ein lichtreflexfreier Raum (16) vorgesehen ist.

4. Anordnung nach einem der vorhergehenden Ansprüche, **dadurch gekennzeichnet, dass** das Bildaufnahmegerät (30) in seiner vertikalen Ausrichtung unter einem spitzen Winkel (α) bezüglich der Hertzantalekene auf das Behältnis (20) ausgerichtet und fokussiert ist.

5. Anordnung nach einem der vorhergehenden Ansprüche, **dadurch gekennzeichnet, dass** die optische Achse (54) des Bildaufnahmegeräts (30) in einer vertikalen Ebene verläuft, die senkrecht zur Linie (A) liegt, wobei die Linie (B) in dieser vertikalen Ebene liegt.

6. Anordnung nach einem der vorhergehenden Ansprüche, **dadurch gekennzeichnet, dass** die Lampen (46,47,48) von dem Behältnis (20) den gleichen horizontalen Abstand aufweisen.

7. Anordnung nach Anspruch 6, **dadurch gekennzeichnet, dass** der Abstand jeder Lampe (46,47,48) von dem Behältnis (20) sechzig [60] Millimeter beträgt.

8. Anordnung nach einem der vorhergehenden Ansprüche, **dadurch gekennzeichnet, dass** die vertikale Höhe der zu beiden Seiten des in der Analyseposition (22) befindlichen Behältnisses (20) angeordneten seitlichen Lampen (46, 47) größer bemessen ist als die vertikale Höhe der mittleren Lampe (48).

9. Anordnung nach Anspruch 8, **dadurch gekennzeichnet, dass** der Unterschied in der Höhe zwischen den seitlichen Lampen (46,47) und der mittleren Lampe (48) sechzehn (16) Millimeter beträgt.

10. Anordnung nach einem der vorhergehenden Ansprüche, **dadurch gekennzeichnet, dass** ein Scanner (29) vorgesehen ist, der auf das in der Analyseposition (22) befindliche Behältnis (20) ausgerichtet ist.

11. Anordnung nach Anspruch 10, **dadurch gekennzeichnet**, **dadurch gekennzeichnet, dass** der Scanner (29) ein Barcode-Scanner ist.

12. Anordnung nach einem der vorhergehenden Ansprüche, **dadurch gekennzeichnet, dass** eine Antireflexplatte (36) vorgesehen ist, die an der dem Bildaufnahmegerät (30) abgekehrten Seite des Behältnisses (20) angeordnet ist.

13. Anordnung nach Anspruch 12, **dadurch gekennzeichnet, dass** die Antireflexplatte (36) mit einer weißen Oberfläche versehen ist und eine der Umfangsform des Behältnisses (20) angepasste konkave Einsenkung (37) aufweist.

14. Anordnung nach Anspruch 12 oder 13, **dadurch gekennzeichnet, dass** die Einsenkung (37) mit Abrundungen (38,39) in je eine ebene Fläche (40,41) der Antireflexplatte (36) übergeht und die Flächen (40,41) in je einer scharfkantigen vertikalen Kante (42,43) enden, wobei jede Kante als eine Messkante dient.

15. Anordnung nach einem der Ansprüche 12 bis 14, **dadurch gekennzeichnet, dass** die Antireflexplatte (36) aus einer an dem Behältnis (20) anliegenden Stellung in Richtung der optischen Achse (54) des Bildaufnahmegeräts (30) von dem Behältnis (20) wegbewegbar und wieder an das Behältnis heranbewegbar angeordnet ist.

16. Anordnung nach einem der vorhergehenden Ansprüche, **dadurch gekennzeichnet, dass** eine Handhabungsvorrichtung, vorzugsweise ein Hub-Dreh-Greifer (35), für die Bewegung eines Behältnisses (20) aus seiner Transportposition in seine Analyseposition (22) vorgesehen ist.

17. Vorrichtung zur Analyse von Körperflüssigkeiten, enthaltend eine Anordnung nach einem der Ansprüche 1 bis 16.

18. Verfahren zur Analyse von Körperflüssigkeiten, **dadurch gekennzeichnet, dass** mittels einer Anordnung nach einem der Ansprüche 1 bis 16 mindestens ein Bild hergestellt wird, das mittels einer Bildverarbeitungssoftware analysiert wird.

19. Verfahren nach Anspruch 18, **dadurch gekennzeichnet, dass** mittels eines Scanners (29) die Endkanten (28) eines auf dem Behältnis (20) befindlichen Etiketts (27) erfasst werden, und
dass das Behältnis (20) anschließend mittels einer Steuerungssoftware in eine Analyseposition (22) gebracht wird, in der das Etikett (27) auf der von dem Bildaufnahmegerät (30) abgewandten Seite des Behältnisses (20) liegt.

20. Verfahren nach den Ansprüchen 18 oder 19, **dadurch gekennzeichnet, dass** ein oder mehrere Ausschnittbilder hergestellt werden, die mittels der Bildverarbeitungssoftware zu einem Gesamtbild zusammengesetzt werden.

## Claims

1. An arrangement for analyzing body fluids comprising:
- a chamber (16) with low optical reflections, wherein a container (20) including the body fluid (21) is provided in an analysis position (22),
- an image recording device (30), and
- an electronic image evaluation device (13),
- the image recording device (30) being connected to the image evaluation device (13) and being aligned with and focused on the container (20), and
- an illuminating device (45) arranged within the chamber with low optical reflections, having
- on both sides of the container (20) lateral lamps (46, 47) arranged such that the mid points (49, 50) of the two lateral lamps (46, 47) and the mid point (51) of the container (20) lie on a straight line (A), and
- a further middle lamp (48) being arranged in such a way that the mid points (53, 51) of said middle lamp (48) and of the container (20) likewise lie on a straight line (B) which runs perpendicular to the straight line (A).

2. The arrangement according to claim 1, **characterized in that** the image recording device (30) is a photographic still camera, a colour image camera, a video camera, or a spectral camera.

3. The arrangement according to any of the preceding claims, **characterized in that** a chamber (16) without optical reflections is provided.

4. The arrangement according to any of the preceding claims, **characterized in that** the image recording device (30), in its vertical alignment, is aligned with and focused on the container (20) in an acute angle (α) relative to the horizontal plane.

5. The arrangement according to any of the preceding claims, **characterized in that** the optical axis (54) of the image recording device (30) runs in a vertical plane that is perpendicular to the line (A), the line (B) lying in this vertical plane.

6. The arrangement according to any of the preceding claims, **characterized in that** the lamps (46, 47, 48) have the same horizontal spacing from the container (20).

7. The arrangement according to claim 6, **characterized in that** the spacing of each lamp (46, 47, 48) from the container (20) is sixty [60] millimeters.

8. The arrangement according to any of the preceding claims, **characterized in that** the vertical height of the lateral lamps (46, 47) arranged on two sides of the container (20) located in the analysis position (22) is of greater dimension than the vertical height of the middle lamp (48).

9. The arrangement according to claim 8, **characterized in that** the difference in height between the lateral lamps (46, 47) and the middle lamp (48) is sixteen [16] millimeters.

10. The arrangement according to any of the preceding claims, **characterized in that** a scanner (29) is provided that is aligned with the container (20) located in the analysis position (22).

11. The arrangement according to claim 10, **characterized in that** the scanner (29) is a barcode scanner.

12. The arrangement according to any of the preceding claims, **characterized in that** an antireflection plate (36) is provided that is arranged on the side of the container (20) turned away from the image recording device (30).

13. The arrangement according to claim 12, **characterized in that** the antireflection plate (36) is provided with a white surface, and has a concave depression (37) adapted to the peripheral shape of the container (20).

14. The arrangement according to claim 12 or 13, **characterized in that** the depression (37) merges with the aid of rounded-off portions (38, 39) into in each case a flat surface (40, 41) of the antireflection plate (36), and the surfaces (40, 41) end in each case in a sharp-edged vertical edge (42, 43), each edge serving as a measuring edge.

15. The arrangement according to any of the claims 12 through 14, **characterized in that** the antireflection plate (36) is arranged such that it can be moved away from the container (20) from a position bearing against the container (20) in the direction of the optical axis (54) of the image recording device (30), and such that it can be moved up to the container again.

16. The arrangement according to any of the preceding claims, **characterized in that** a handling apparatus, preferably a lifting rotary gripper (35), is provided for moving a container (20) from its transport position into its analysis position (22).

17. An apparatus for analyzing body fluids that contains an arrangement according to any of the claims 1 through 16.

18. A method for analyzing body fluids, **characterized in that** at least one image produced by means of an arrangement according to any of the claims 1 through 16 is analyzed by means of an image processing software.

19. The method according to claim 18, **characterized in that** the end edges (28) of a label (27) located on the container (20) are detected by means of a scanner (29), and **in that** the container (20) is subsequently transferred into an analysis position (22) by means of a control software in which position the label (27) lies on the side of the container (20) averted from the image recording device (30).

20. The method according to claim 18 or 19, **characterized in that** one or more detailed images are produced that are combined to form an overall image by means of the image processing software.

## Revendications

1. Système pour analyser des liquides organiques avec :
- un espace à faible réflexion de la lumière (16) placé dans une position d'analyse (22) dans le récipient (20) contenant le liquide organique (21) ;
- un appareil de prise d'image (30) ; et
- un appareil d'analyse d'image (13) électronique ;
- l'appareil de prise d'image (30) étant relié à l'appareil d'analyse d'image (13) et orienté et focalisé sur le récipient (20) ; et
- un dispositif d'éclairage (45) disposé à l'intérieur de l'espace à faible réflexion de la lumière, avec :
- des lampes latérales (46, 47) disposées respectivement des deux côtés du récipient (20), de telle sorte que les points médians (49, 50) des deux lampes (46, 47) et le point médian (51) du récipient (20) se situent sur une ligne droite (A) ; et
- une autre lampe (48) centrale disposée de telle sorte que les points médians (53, 51) de cette lampe centrale (48) et du récipient (20) se situent également sur une ligne droite (B) perpendiculaire à la ligne (A).

2. Système selon la revendication 1, **caractérisé en ce que** l'appareil de prise d'image (30) est un appareil photographique pour diapositives, un appareil photographique en couleur, une caméra vidéo ou une caméra spectrale.

3. Système selon l'une quelconque des revendications précédentes, **caractérisé en ce qu'**un espace à faible réflexion de la lumière (16) est prévu.

4. Système selon l'une quelconque des revendications précédentes, **caractérisé en ce que** l'appareil de prise d'image (30) est orienté et focalisé sur le récipient (20) selon un angle aigu (α) par rapport au plan horizontal dans son orientation verticale.

5. Système selon l'une quelconque des revendications précédentes, **caractérisé en ce que** l'axe optique (54) de l'appareil de prise d'image (30) s'étend dans un plan vertical perpendiculaire à la ligne (A), la ligne (B) se trouvant dans ledit plan vertical.

6. Système selon l'une quelconque des revendications précédentes, **caractérisé en ce que** les lampes (46, 47, 48) du récipient (20) comportent le même écartement horizontal.

7. Système selon la revendication 6, **caractérisé en ce que** l'écartement de chaque lampe (46, 47, 48) par rapport au récipient (20) est de soixante (60) millimètres.

8. Système selon l'une quelconque des revendications précédentes, **caractérisé en ce que** la hauteur verticale des lampes latérales (46, 47) disposées des deux côtés du récipient (20) se trouvant en position d'analyse (22) est supérieure à la hauteur verticale de la lampe (48) centrale.

9. Système selon la revendication 8, **caractérisé en ce que** la différence de hauteur entre les lampes latérales (46, 47) et la lampe (48) centrale est de seize (16) millimètres.

10. Système selon l'une quelconque des revendications précédentes, **caractérisé en ce qu'**un lecteur optique (29) est prévu de façon à être orienté sur le récipient (20) se trouvant dans la position d'analyse (22).

11. Système selon la revendication 10, **caractérisé en ce que** le lecteur optique (29) est un lecteur optique de code barre.

12. Système selon l'une quelconque des revendications précédentes, **caractérisé en ce qu'**une plaque antiréflexive (36) est prévue, ladite plaque étant disposée au niveau du côté du récipient (20) opposé à l'appareil de prise d'image (30).

13. Système selon la revendication 12, **caractérisé en ce que** la plaque antiréflexive (36) est pourvue d'une surface blanche et comporte un renfoncement (37) concave adapté à la forme de la périphérie du récipient (20).

14. Système selon la revendication 12 ou 13, **caractérisé en ce que** le renfoncement (37) se transforme en arrondis (38, 39) dans une surface respectivement plane (40, 41) de la plaque antiréflexive (36) et que les surfaces (40, 41) se terminent respectivement en une arête (42, 43) verticale à angles vifs, chaque arête servant d'arête tranchante.

15. Système selon l'une quelconque des revendications 12 à 14, **caractérisé en ce que** la plaque antiréflexive (36) est disposée de façon à pouvoir être amenée d'une position reposant contre le récipient (20) en direction de l'axe optique (54) de l'appareil de prise d'image (30) en partant du récipient (20) puis être ramenée contre le récipient.

16. Système selon l'une quelconque des revendications précédentes, **caractérisé en ce qu'**un dispositif de manutention, de préférence un crochet de pivotement - levage (35), est prévu pour le déplacement d'un récipient (20) de sa position de transport dans sa position d'analyse (22).

17. Dispositif pour analyser des liquides organiques, contenant un système selon l'une quelconque des revendications 1 à 16.

18. Procédé pour analyser des liquides organiques, **caractérisé en ce qu'**au moins une image est fabriqué à l'aide d'un système selon l'une quelconque des revendications 1 à 16, ladite image étant analysée à l'aide d'un logiciel de traitement d'image.

19. Procédé selon la revendication 18, **caractérisé en ce que** les arêtes terminales (28) d'une étiquette (27) se trouvant sur le récipient (20) sont saisies à l'aide d'un lecteur optique (29) et que le récipient (20) est ensuite amené à l'aide d'un logiciel de module de commande dans une position d'analyse (22) dans laquelle l'étiquette (27) repose sur le côté opposé du récipient (20) par rapport à l'appareil de prise d'image (30).

20. Procédé selon les revendications 18 ou 19, **caractérisé en ce qu'**un ou plusieurs extraits d'image sont fabriqués, lesdites images pouvant être assemblées à l'aide du logiciel de traitement d'image pour former une image globale.
